# EUROPÄISCHE PATENTSCHRIFT

(11) **EP 2 556 287 B1**
(45) Veröffentlichungstag und Bekanntmachung des Hinweises auf die Patenterteilung: **26.10.2016**
(21) Anmeldenummer: 11713486.6
(22) Anmeldetag: 06.04.2011
(51) Int. Cl.: F21K 99/00, G02B 6/00, G02F 1/13357

(54) **ANORDNUNG ZUR LICHTABGABE MIT MEHREREN LICHTQUELLEN UND TRANSPARENTEM LICHTABSTRAHLELEMENT**
LIGHT EMISSION ARRANGEMENT HAVING A PLURALITY OF LIGHT SOURCES AND A TRANSPARENT LIGHT EMISSION ELEMENT
ARRANGEMENT D'ÉMISSION DE LUMIÈRE COMPRENANT PLUSIEURS SOURCES DE LUMIÈRE ET UN ÉLÉMENT DIFFUSEUR DE LUMIÈRE TRANSPARENT

(30) Priorität: 09.04.2010 DE 202010004777 U
(43) Veröffentlichungstag der Anmeldung: 13.02.2013
(73) Patentinhaber: Zumtobel Lighting GmbH, 6850 Dornbirn (AT)
(72) Erfinder: WIMMER, Rebekka, 6932 Langen bei Bregenz (DE)
(74) Vertreter: Thun, Clemens
(86) Internationale Anmeldenummer: PCT/EP2011/055330
(87) Internationale Veröffentlichungsnummer: WO 2011/124599

(56) Entgegenhaltungen:
- EP-A1- 2 372 413
- EP-A2- 2 485 073
- EP-A2- 2 639 499
- WO-A1-03/059012
- WO-A1-2006/114750
- WO-A1-2008/090507
- DE-A1- 10 332 158
- DE-A1- 19 957 611
- DE-A1-102006 056 150
- JP-A- H11 329 041
- US-A1- 2006 237 737
- US-A1- 2007 018 558
- US-A1- 2007 081 321

## Beschreibung

Die vorliegende Erfindung betrifft eine Anordnung zur Lichtabgabe gemäß dem Oberbegriff des Anspruchs 1, welche mehrere im Wesentlichen punktförmige Lichtquellen sowie ein transparentes Lichtabstrahlelement aufweist, wobei die Lichtquellen bezüglich dem Abstrahlelement derart angeordnet sind, dass ihr Licht über eine Lichteinstrahlfläche in das Lichtabstrahlelement eingestrahlt und über eine der Lichteinstrahlfläche im Wesentlichen gegenüberliegende Lichtabstrahlfläche wieder abgestrahlt wird. Bei den punktförmigen Lichtquellen handelt es sich um LEDs.

Die beständige Weiterentwicklung von LEDs in den letzten Jahren hat zur Folge, dass derartige Lichtquellen zunehmend nicht nur in Anzeigeeinrichtungen oder zur Bereitstellung von Informationen verwendet werden, sondern auch in der allgemeinen Beleuchtungstechnologie zum Einsatz kommen. Da die Leistungsfähigkeit von LEDs in letzter Zeit drastisch erhöht werden konnte, können derartige Lichtquellen nunmehr in nahezu sämtlichen Fällen auch klassische Lichtquellen wie Glühbirnen oder Leuchtstofflampen ersetzen.

Bei der Verwendung von LEDs ist allerdings zu berücksichtigen, dass diese im Vergleich zu anderen Lichtquellen, beispielsweise Glühlampen, einen niedrigeren sog. Farbwiedergabeindex (Color Rendering Index - CRI) aufweisen. Es handelt sich hierbei um eine Maßzahl zur Beschreibung der Farbwiedergabe von Lampen, welche zum Ausdruck bringt, wie stark sich die Farbe eines Objekts bei der Beleuchtung ändert. Als Bezugsstrahler dient ein schwarzer Strahler mit der ähnlichsten Farbtemperatur; oberhalb einer Farbtemperatur von 5000 K wird als Bezugsstrahler das Spektrum des natürlichen Tageslichts bei den entsprechenden Farbtemperaturen verwendet. Während nunmehr eine Glühlampe mit einem CRI von fast 100 ausgezeichneten Farbwiedergabeeigenschaften aufweist, liegt der Farbwiedergabeindex von sog. Weisslicht-LEDs deutlich darunter. Grund hierfür ist das verhältnismäßige enge Spektrum derartiger Halbleiterlichtquellen.

Um die Farbwiedergabe bei entsprechenden LED-Leuchten zu erhöhen, ist es bekannt, zur Veränderung des Spektrums andersfarbige LEDs einzusetzen. Üblicherweise werden hierzu mehrere andersfarbige LEDs auf dem Board bzw. Trägerelement, auf dem auch die Weisslicht-LEDs als Hauptlichtquellen angeordnet sind, verteilt, um eine homogene Lichtdurchmischung zu erzielen. Eine derartige Vorgehensweise ist allerdings mit einem verhältnismäßig hohem Aufwand verbunden.

Aus der DE 10 2006 056 150 A1 ist eine Vorrichtung zur Abstrahlung elektromagnetischer Strahlung bekannt, die einen plattenförmigen Lichtleiter mit zwei gegenüberliegenden Hauptoberflächen umfasst. Eine der Hauptoberflächen stellt eine Strahlungsaustrittsfläche dar und die gegenüberliegende, andere Hauptoberfläche eine rückseitige Fläche. Von einer schmalen Seitenfläche her wird über erste LEDs weißes Licht in den Lichtleiter eingekoppelt und über die rückseitige Fläche über zweite LEDs ein farbiges Licht.

Der vorliegenden Erfindung liegt die Aufgabe zu Grunde, eine neuartige Lösung zur Veränderung des Spektrums einer Leuchte, bei der LEDs als Lichtquellen eingesetzt werden, anzugeben.

Die Aufgabe wird durch eine Anordnung zur Lichtabgabe, welche die Merkmale des Anspruchs 1 aufweist, gelöst. Vorteilhafte Weiterbildungen der Erfindung sind Gegenstand der abhängigen Ansprüche.

Der erfindungsgemäßen Lösung liegt der Gedanke zu Grunde, zur Abstrahlung des Lichts der Weisslicht-LEDs ein Lichtabstrahlelement einzusetzen, das gleichzeitig auch zum Verteilen des Lichts weiteren LEDs, über die das Spektrum des insgesamt abgegebenen Lichts verändert werden soll, genutzt wird. Das Lichtabstrahlelement, welches von den Weisslicht-LEDs in erster Linie durchstrahlt wird, dient für das Licht der weiteren LEDs dann also als Lichtleiter, um das Licht dieser weiteren LEDs homogen zu verteilen. Diese Lösung bringt den Vorteil mit sich, dass zum Verändern des Spektrums der gesamten Anordnung weniger Lichtquellen der zweiten Art erforderlich sind und trotz allem eine homogene Durchmischung erzielt wird. Der Farbwiedergabeindex (CRI) kann also auf einfache Weise erhöht werden.

Erfindungsgemäß wird also eine Anordnung zur Lichtabgabe vorgeschlagen, mit mehreren LEDs, sowie einem transparenten Lichtabstrahlelement, wobei die ersten LEDs bezüglich dem Lichtabstrahlelement derart angeordnet sind, dass ihr Licht über eine Lichteinstrahlfläche in das Lichtabstrahlelement eingestrahlt und über eine der Lichteinstrahlfläche im Wesentlichen gegenüberliegende Lichtabstrahlfläche abgestrahlt wird. Erfindungsgemäß weist die Anordnung weitere LEDs auf, deren Licht sich von dem Licht der ersten LEDs unterscheidet, wobei die weiteren LEDs bezüglich dem Lichtabstrahlelement derart angeordnet ist, dass ihr Licht über eine von der Lichteinstrahlfläche der ersten LEDs getrennte Fläche in das Lichtabstrahlelement eingestrahlt wird, und wobei das Lichtabstrahlelement für das Licht der weiteren LEDs als Lichtleitelement dient, derart, dass das Licht der weiteren LEDs im Wesentlichen über die gesamte Lichtabstrahlfläche verteilt abgestrahlt wird.

Erfindungsgemäß sind die ersten LEDs und die weiteren LEDs auf einem gemeinsamen Trägerelement angeordnet. Hierzu ist das Lichtabstrahlelement im Wesentlichen plattenförmig ausgebildet, wobei die Lichteinstrahlfläche der ersten LEDs und die Lichtabstrahlfläche durch zwei einander gegenüberliegende Flachseiten des Lichtabstrahlelements gebildet sind und wobei ein Endbereich des Lichtabstrahlelements derart gebogen ausgebildet ist, dass eine Stirnfläche parallel zur Lichteinstrahlfläche ausgerichtet ist. Das Lichtabstrahlelement könnte wiederum allerdings auch stab- oder zylinderförmig ausgebildet sein, wobei dann die ersten Lichtquellen am Umfang der Mantelfläche angeordnet sind und wobei ein Endbereich des Lichtabstrahlelements derart gebogen ausgebildet ist, dass seine Stirnfläche parallel zur Lichteinstrahlfläche ausgerichtet ist.

Bei den Lichtquellen handelt es sich um LEDs, wobei die ersten LEDs vorzugsweise weißes Licht abgeben und die weiteren LEDs farbiges Licht abgeben.

Je nach gewünschter Veränderung für das Spektrum des abgegebenen Lichts könnten auch bei den weiteren LEDs welche vorgesehen sein, die jeweils unterschiedlich farbliches Licht emittieren.

Letztendlich wird durch die vorliegende Erfindung die Möglichkeit geschaffen, die Lichtabgabe einer entsprechenden Anordnung in einfacher Weise durch die Hinzufügung farbigen Lichts zu modifizieren, wobei allerdings nur wenige Lichtquellen für das farbige Licht erforderlich sind.

Nachfolgend soll die Erfindung anhand der beiliegenden Zeichnung näher erläutert werden. Es zeigen:
Fig. 1 ein nicht erfindungsgemäßes Beispiel einer Anordnung zur Lichtabgabe und
Fig. 2 ein Ausführungsbeispiel einer erfindungsgemäßen Anordnung.

Die Anordnung kann als längliche oder flächige Lichtquelle realisiert werden und insbesondere in unterschiedlichst gestaltete Leuchten integriert werden. Bei der Darstellung der vorliegenden Erfindung wurde dabei auf die weiteren Bestandteile der Leuchte verzichtet. Es sollen im Folgenden ausschließlich die Komponenten der Anordnung zur Lichtabgabe beschrieben werden.

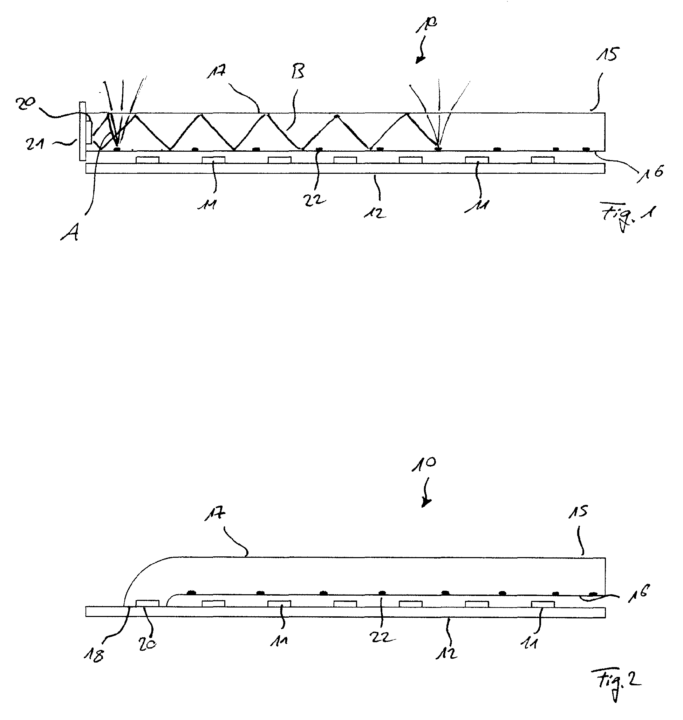

Die in Fig. 1 dargestellte und allgemein mit dem Bezugszeichen 10 versehene Anordnung zur Lichtabgabe weist hierbei zunächst mehrere punktförmige Lichtquellen eines ersten Typs auf, welche durch LEDs 11 gebildet werden. Diese ersten Lichtquellen 11, welche insbesondere durch Weisslicht-LEDs gebildet sind (wobei allerdings auch andere Farben genutzt werden könnten), sind gemeinsam auf einem Trägerelement 12 angeordnet. Im dargestellten Beispiel ist eine Seitenansicht der Anordnung 10 zu sehen. Die LEDs 11 sind hierbei matrixartig auf einer quadratischen oder rechteckigen Platine 12 angeordnet. Sie werden gemeinsam von einer nicht näher dargestellten Steuereinheit angesteuert und mit Strom versorgt. Es wäre selbstverständlich auch ein Einstellen der Helligkeit bzw. Dimmen der LEDs 11 denkbar.

Die Abstrahlung des von den LEDs 11 abgegebenen Lichts erfolgt über ein transparentes Lichtabstrahlelement 15, dessen Abmessungen im Wesentlichen den Abmessungen der LED-Platine 12 entsprechen. Im vorliegenden Fall ist also auch das Lichtabstrahlelement 15 plattenförmig ausgebildet und weist eine den Weisslicht-LEDs 11 zugewandte Lichteinstrahlfläche 16 sowie eine der Lichteinstrahlfläche 16 gegenüberliegende Lichtabstrahlfläche 17 auf. Die beiden Flachseiten des Lichtabstrahlelements 15 dienen also der Lichteinstrahlung sowie der Lichtabgabe. Um hierbei eine gleichmäßige bzw. homogene Lichtabgabe zu erzielen, kann vorgesehen sein, dass das Lichtabstrahlelement 15 zumindest leicht lichtstreuend wirkt, wozu beispielsweise die Lichtabstrahlfläche 17 mit einer entsprechenden Struktur versehen sein. Denkbar wäre auch, die Lichtabstrahlfläche 17 mit einer Prismenstruktur zu versehen, um die Lichtabgabe der gesamten Anordnung 10 auf einen bestimmten Winkelbereich zu begrenzen. Wesentlich ist, dass das Licht der Weisslicht-LEDs 11, welches über die Lichteinstrahlfläche 16 in das Lichtabstrahlelement 15 eintritt, nur geringfügig abgelenkt wird und dementsprechend im Wesentlichen ungehindert das Lichtabstrahlelement 15 durchtritt.

Bei einer Verwendung von Weisslicht-LEDs ergibt sich - wie Eingangs geschildert-das Problem, dass die Farbwiedergabe verhältnismäßig gering ist. Sie kann allerdings verbessert werden, wenn dem Licht der LEDs 11 zusätzliches Licht eines bestimmten Farbtons, beispielsweise rotes oder blaues Licht zugemischt wird. Die Anordnung 10 weist hierzu zumindest eine Lichtquelle eines zweiten Typs 20 auf. Im vorliegenden Fall eines plattenförmigen Lichtabstrahlelements 15 sind vorzugsweise mehrere zweite Lichtquellen 20 vorgesehen, welche auf einem zweiten Trägerelement 21, insbesondere einer zweiten Platine angeordnet sind. Die Platine 21 mit zugehörigen zweiten Lichtquellen 20, die insbesondere durch weitere LEDs gebildet sind, ist hierbei an einer der Schmalseiten des plattenförmigen Lichtgleitelements 15 angeordnet. Dementsprechend wird das Licht dieser zweiten Lichtquellen 20 über eine Schmal- oder Stirnseite in das Lichtabstrahlelement 15 eingestrahlt.

Bei dieser Ausgestaltung ergibt sich der Effekt, dass das Lichtabstrahlelement 15 für das Licht dieser zweiten LEDs 20 als Lichtleitelement dient, um das Licht derart zu verteilen, dass es homogen und gleichmäßig über die Lichtabstrahlfläche 17 abgestrahlt wird. Das Licht der zweiten LEDs 20 wird also gleichmäßig dem Licht der ersten Lichtquellen 11 zugemischt, sodass eine homogene Durchmischung stattfindet.

Die Wirkung des Lichtabstrahlelements 15 als Lichtleiter für das Licht der zweiten LEDs 20 ist schematisch anhand von zwei Lichtstrahlen A und B dargestellt. Diese werden an den beiden Flachseiten 16 und 17 des Lichtabstrahlelements 15 totalreflektiert, so dass das Licht bis zur gegenüberliegenden Seite des Lichtabstrahlelements 15 transportiert wird. An der Lichteintrittsfläche 16 des Lichtabstrahlelements 15 sind allerdings lichtauskoppelnde Strukturen 22 - beispielsweise in Form von Vertiefungen öder Ätzstrukturen - vorgesehen, welche einen auftreffenden Lichtstrahl derart umlenken bzw. streuen, dass dieser nunmehr das Lichtabstrahlelement 15 über dessen Lichtabstrahlfläche 17 verlassen kann. Die Verteilung dieser lichtauskoppelnden Strukturen 22 ist hierbei nicht gleichmäßig sondern derart, dass ihre Dichte mit zunehmendem Abstand von der zweiten Lichtquelle 20 zunimmt. Hierdurch wird berücksichtigt, dass ein Teil des Lichts auf dem Weg durch das Lichtabstrahlelement 15 dieses verlässt. Dieser Verlust wird durch den Anstieg der Dichte der Lichtauskuppelstrukturen 22 ausgeglichen, sodass letztendlich über die gesamte Fläche des Lichtabstrahlelements 15 hinweg gleichmäßig stark das Licht der zweiten Lichtquellen 20 abgegeben wird. Ferner ist die Anordnung der Lichtauskuppelstrukturen 22 auf die evtl. vorhandenen Strukturen zur Lichtlenkung für das Licht der ersten Lichtquellen 11 abgestimmt, um gegenseitige Störungen zu vermeiden. Letztendlich wird also das Licht der zweiten Lichtquellen 20 homogen dem Licht der ersten Lichtquellen 11 zugemischt.

Bei dem zuvor beschriebenen Beispiel war das Lichtabstrahlelement 15 plattenförmig ausgebildet. Es wäre allerdings in gleicher Weise auch denkbar, ein stab- oder zylinderförmiges Lichtabstrahlelement 15 zu verwenden. In diesem Fall ist auch die LED-Platine 12 mit den ersten Lichtquellen 11 lediglich streifenförmig ausgebildet. An einer Stirnseite des Zylinders ist dann eine einzelne LED 20 des zweiten Typs angeordnet. Auch im Falle eines stab- bzw. zylinderförmigen Lichtabstrahlelements 15 wird durch die zuvor erwähnte Lichtleitung eine gleichmäßige Zumischung des Lichts der zweiten LED 20 erzielt.

Bei den beiden zuvor beschriebenen Varianten waren grundsätzlich zwei verschiedene Trägerelemente bzw. Platinen für die Lichtquellen des ersten Typs sowie die Lichtquelle bzw. Lichtquellen des zweiten Typs vorgesehen.

In Fig. 2 ist ein erfindungsgemäßes Ausführungsbeispiel dargestellt, welches es ermöglicht, alle Lichtquellen, also sowohl die ersten LEDs 11 und die weiteren LEDs 20 auf einer gemeinsamen Platine anzuordnen. Wiederum kann diese Ausführungsform flächig, also mit einem plattenförmigen Lichtabstrahlelement, oder linear bzw. stabförmig ausgeführt sein.

Die Besonderheit des Ausführungsbeispiels, bei dem gleiche Elemente mit den gleichen Bezugszeichen wie in Fig. 1 versehen sind, besteht darin, dass das Lichtabstrahlelement 15 an dem der Lichtquelle bzw. Lichtquellen des zweiten Typs 20 zugewandten Ende umgebogen ist. Insbesondere ist das Lichtabstrahlelement derart verformt, dass die Stirnfläche 18 nunmehr parallel zur Lichteinstrahlfläche 16 für die Lichtquellen des ersten Typs 11 ausgerichtet ist. Wie dargestellt kann/können deshalb nunmehr die Lichtquelle bzw. Lichtquellen des zweiten Typs 20 auf der gleichen Platine 12 wie die Lichtquellen des ersten Typs 11 angeordnet werden. Die Anordnung einer separaten zusätzlichen Platine ist nun nicht mehr erforderlich.

Auch in diesem Fall dient allerdings das Lichtabstrahlelement 15 für das Licht der zweiten LEDs 20 als Lichtleiter zur gleichmäßigen Lichtverteilung, während hingegen das Licht der ersten Lichtquellen 11 das Lichtabfallelement 15 im Wesentlichen ungehindert durchstrahlt. Dementsprechend wird auch in diesem Fall die angestrebte Vermischung zwischen Weisslicht und farbigem Licht erzielt, so dass wiederum der CRI der Anordnung in einfacher aber effektiver Weise erhöht werden kann.

## Patentansprüche

1. Anordnung zur Lichtabgabe (10), mit LEDs (11), sowie einem transparenten Lichtabstrahlelement (15), wobei die LEDs (11) bezüglich dem Lichtabstrahlelement (15) derart angeordnet sind, dass ihr Licht über eine Lichteinstrahlfläche (16) in das Lichtabstrahlelement (15) eingestrahlt und über eine der Lichteinstrahlfläche (16) im Wesentlichen gegenüberliegende Lichtabstrahlfläche (17) abgestrahlt wird,
wobei die Anordnung (10) weitere LEDs (20) aufweist, deren Licht sich von dem Licht der zuerst genannten LEDs (11) unterscheidet,
wobei die weiteren LEDs (20) bezüglich dem Abstrahlelement (15) derart angeordnet sind, dass ihr Licht über eine von der Lichteinstrahlfläche (16) der zuerst genannten LEDs (11) getrennte Fläche in das Lichtabstrahlelement (15) eingestrahlt wird, und
wobei das Lichtabstrahlelement (15) für das Licht der weiteren LEDs (20) als Lichtleitelement dient, derart, dass das Licht der weiteren LEDs (20) im Wesentlichen über die gesamte Lichtabstrahlfläche (17) verteilt abgestrahlt wird,
**dadurch gekennzeichnet,**
**dass** die zuerst genannten LEDs (11) und die weiteren LEDs (20) auf einem gemeinsamen Trägerelement angeordnet sind.

2. Anordnung nach Anspruch 1,
**dadurch gekennzeichnet,**
**dass** das Lichtabstrahlelement (15) im Wesentlichen plattenförmig ausgebildet ist, wobei die Lichteinstrahlfläche (16) der zuerst genannten LEDs (11) und die Lichtabstrahlfläche (17) durch zwei einander gegenüberliegende Flachseiten des Lichtabstrahlelements (15) gebildet sind und wobei ein Endbereich des Lichtabstrahlelements (15) derart gebogen ausgebildet ist, dass seine Stirnfläche (18) parallel zur Lichteinstrahlfläche (16) ausgerichtet ist.

3. Anordnung nach Anspruch 1,
**dadurch gekennzeichnet,**
**dass** das Lichtabstrahlelement (15) stab- oder zylinderförmig ausgebildet ist, wobei die zuerst genannten LEDs (11) am Umfang der Mantelfläche angeordnet sind und wobei ein Endbereich des Lichtabstrahlelements (15) derart gebogen ausgebildet ist, dass seine Stirnfläche parallel zur Lichteinstrahlfläche ausgerichtet ist.

4. Anordnung nach Anspruch 3,
**dadurch gekennzeichnet,**
**dass** die zuerst genannten LEDs (11) weißes Licht abgeben und die weiteren LEDs (20) farbiges Licht abgeben.

## Claims

1. An arrangement for light emission (10), having LEDs (11), as well as a transparent light emission element (15), wherein the LEDs (11) are arranged with respect to the light emission element (15) in such a way that their light is radiated via a light entry surface (16) into the light emission element (15) and is emitted via a light exit surface (17), which is substantially opposite the light entry surface (16),
wherein the arrangement (10) has additional LEDs (20), the light of which differs from the light of the first-mentioned LEDs (11),
wherein the further LEDs (20) are arranged with respect to the emission element (15) in such a way that their light is radiated via a surface separated from the light entry surface (16) of the first-mentioned LEDs (11) into the light emission element (15), and
wherein the light emission element (15) serves as a light-guiding element for the light of the additional LEDs (20) in such a way that the light of the additional LEDs (20) is emitted in such a way as to be distributed substantially over the entire light exit surface (17),
**characterized in**
**that** the first-mentioned LEDs (11) and the additional LEDs (20) are arranged on a common carrier element.

2. An arrangement according to Claim 1,
**characterized in**
**that** the light emission element (15) is designed substantially plate-shaped, wherein the light entry surface (16) of the first-mentioned LEDs (11) and the light exit surface (17) are formed by two flat sides of the light emission element (15) opposite each other and wherein an end area of the light emission element (15) is designed bent in such a way, that its front surface (18) is aligned parallel to the light entry surface (16).

3. An arrangement according to Claim 1,
**characterized in**
**that** the light emission element (15) is designed rod-shaped or cylindrical, wherein the first-mentioned LEDs (11) are arranged on the circumference of the lateral surface and wherein an end area of the light emission element (15) is designed bent in such a way that its front surface is aligned parallel to the light entry surface.

4. An arrangement according to Claim 3
**characterized in**
**that** the first-mentioned LEDs (11) emit white light and the additional LEDs (20) emit colored light.

## Revendications

1. Dispositif d'émission de lumière (10) avec des LED (11), ainsi qu'un élément d'émission de lumière transparent (15), les LED (11) étant disposés par rapport à l'élément d'émission de lumière (15) de façon à ce que leur lumière soit introduite, par l'intermédiaire d'une surface d'introduction de lumière (16), dans l'élément d'émission de lumière (15) et émise, par l'intermédiaire d'une surface d'émission de lumière (17) située globalement en face de la surface d'introduction de lumière (16),
le dispositif (10) comprenant des LED (20) supplémentaires dont la lumière est différente de la lumière des LED (11) mentionnées en premier,
les LED supplémentaires (20) étant disposées par rapport à l'élément d'émission (15) de façon à ce que leur lumière soit introduite, par l'intermédiaire d'une surface, distincte de la surface d'introduction de lumière (16) des LED (11) mentionnées en premier, dans l'élément d'émission de lumière (15) et
l'élément d'émission de lumière (15) sert d'élément de guidage de lumière pour la lumière des LED supplémentaires (20), de façon à ce que la lumière des LED supplémentaires (20) soit émise de manière répartie sur globalement toute la surface d'émission de lumière (17),
**caractérisé en ce que**
les LED (11) mentionnées en premier et les LED supplémentaires (20) sont disposées sur un élément de support commun.

2. Dispositif selon la revendication 1,
**caractérisé en ce que**
l'élément d'émission de lumière (15) présente globalement une forme de plaque, la surface d'introduction de lumière (16) des LED (11) mentionnées en premier et la surface d'émission de lumière (17) sont constituées de deux côtés plats opposés de l'élément d'émission de lumière (15) et une zone d'extrémité de l'élément d'émission de lumière (15) étant pliée de façon à ce que sa face frontale (18) soit parallèle à la surface d'introduction de lumière (16).

3. Dispositif selon la revendication 1,
**caractérisé en ce que**
l'élément d'émission de lumière (15) présente une forme de tige ou une forme cylindrique, les LED (11) mentionnées en premier étant disposées sur la périphérie de la surface externe et une zone d'extrémité de l'élément d'émission de lumière (15) étant pliée de façon à ce que sa face frontale soit parallèle à la surface d'introduction de lumière.

4. Dispositif selon la revendication 3,
**caractérisé en ce que**
les LED (11) mentionnées en premier émettent une lumière blanche et les LED supplémentaires (20) émettent une lumière colorée.
